# EUROPÄISCHE PATENTSCHRIFT

(11) **EP 2 196 720 B1**
(45) Veröffentlichungstag und Bekanntmachung des Hinweises auf die Patenterteilung: **17.10.2012**
(21) Anmeldenummer: 09015107.7
(22) Anmeldetag: 05.12.2009
(51) Int. Cl.: F16M 11/04, G03B 17/56

(54) **Schnellspannvorrichtung**
Quick release device
Dispositif d'attache rapide

(30) Priorität: 12.12.2008 DE 102008061980
(43) Veröffentlichungstag der Anmeldung: 16.06.2010
(73) Patentinhaber: CULLMANN-FOTO-AUDIO-VIDEO GmbH, 90579 Langenzenn (DE)
(72) Erfinder: Cullmann, Wolfgang, 90579 Langenzenn (DE)
(74) Vertreter: Louis Pöhlau Lohrentz

(56) Entgegenhaltungen:
- WO-A1-2009/056249
- DE-U1- 9 016 714
- US-A- 5 737 657
- US-B1- 6 196 504
- US-B1- 6 773 172

## Beschreibung

Die Erfindung betrifft eine Schnellspannvorrichtung für ein vorzugsweise optisches Gerät.

Zur raschen Befestigung von Geräten auf einem Stativ oder dergleichen sind Schnellspannvorrichtungen bekannt.

Aus der DE 32 17 122 C2 ist eine Schnellkupplung für das Verbinden eines fotooptischen oder sonstigen Gerätes mit einer Auflage, Stativ oder dergleichen bekannt. Die Schnellkupplung weist eine Klemmplatte auf, die als eine einstückige prismenförmige Kulissenführung mit seitlichen Wänden ausgebildet ist. Eine Halterung für das Gerät wird seitlich in die Kulissenführung eingeführt und ist dort verschiebbar gelagert. Die Halterung ist durch eine Fixiervorrichtung festlegbar. Die Fixiervorrichtung ist als eine Exzenterklemme ausgebildet.

Aus der US 6 773 172 B1 ist eine Schnellkupplung gemäß des Oberbegriffs des Anspruchs 1 bekannt.

Aufgabe der vorliegenden Erfindung ist es, eine verbesserte Schnellspannvorrichtung anzugeben.

Erfindungsgemäß wird diese Aufgabe mit einer Schnellspannvorrichtung für ein vorzugsweise optisches Gerät, insbesondere ein fototechnisches oder filmtechnisches Gerät, gelöst, mit einer Klemmplatte für eine daran feststellbare Halterung für das Gerät, wobei die Klemmplatte als eine prismenförmige Kulissenführung mit seitlichen Wänden und einer Grundfläche ausgeführt ist, wobei ein Teil der Kulissenführung einen Anschlag bildet und ein anderer Teil ein von einer Offenstellung über eine Führungsstellung in eine Klemmstellung verschiebbares Druckstück ist, wobei vorgesehen ist, dass das Druckstück durch einen Spannhebel mit einem Exzenter verschiebbar ist, wobei der Spannhebel von einer Offenstellung über eine Führungsstellung in eine Klemmstellung schwenkbar ist, und dass ein schaltbares Formgesperre das Druckstück daran hindert, aus der Führungsstellung in die Offenstellung zu gelangen.

Dadurch, dass die Kulissenführung ein verschiebbares Druckstück aufweist, kann die Halterung sehr einfach in der Offenstellung des Druckstücks von oben auf die Klemmplatte gesetzt werden.

Ein weiterer Vorteil ergibt sich dadurch, dass ein schaltbares Formgesperre das Druckstück daran hindert, nach dem Verlassen der Klemmstellung die Führungsstellung in Richtung der Offenstellung zu verlassen, wodurch die Halterung nicht nur in der Klemmstellung an der Klemmplatte gegen Herausgleiten aus der Führung bzw. gegen Herabfallen gesichert ist. Der Übergang in die Offenstellung ist erst durch Schalten des Formgesperres möglich, wodurch ein unbeabsichtigtes Verschwenken des Spannhebels nicht zur unbeabsichtigten Freigabe des Duckstücks führt.

Weitere vorteilhafte Ausbildungen sind in den Unteransprüchen bezeichnet.

Es kann vorgesehen sein, dass der Spannhebel mit einer Rückholfeder zusammenwirkt, die den Spannhebel aus der Offenstellung dreht.

Es kann weiter vorgesehen sein, dass die Kulissenführung als eine Schwalbenschwanzführung ausgebildet ist. Die Schwalbenschwanzführung ist allgemein als Führung für feinmechanische bzw. optische Geräte bevorzugt, weil sie eine einfache Formgebung mit hoher Führungsgenauigkeit vereint.

In einer vorteilhaften Weiterbildung kann vorgesehen sein, dass das Formgesperre durch einen federbelasteten Taster schaltbar ist. Dabei kann die Federkraft so gewählt werden, dass der Taster zwar mit einer Hand gut bedienbar ist, jedoch die beim Betätigen aufzubringende Druckkraft so groß ist, dass ein unbeabsichtigtes Auslösen des Tasters vermieden wird.

Weiter kann vorgesehen sein, dass die Klemmplatte von einem in der Längsachse gefederten Schaltstift durchgriffen ist, der in der Offenstellung des Druckstücks aus der Oberseite der Klemmplatte hervorragt und einen Anschlag für das Druckstück bildet. Auf diese Weise wird das Druckstück nach Tasterbetätigung und wieder freigegebenem Spannhebel gegen die Federkraft der Rückholfeder des Spannhebels weiter in der Offenstellung gehalten und muss so nicht beim Einsetzen der Halterung in die Klemmplatte von Hand in die Offenstellung gebracht werden.

In einer weiteren vorteilhaften Ausbildung kann vorgesehen sein, dass der Schaltstift bei eingesetzter Halterung mit der Oberseite der Klemmplatte abschließt, wobei er mit einem Abschnitt an der Unterseite der Halterung zusammenwirkt und das Druckstück freigibt. Auf diese Weise wird das Druckstück beim korrekten Einsetzen der Halterung auf die Klemmplatte automatisch freigegeben, so dass Bedienfehler, die zum Herausgleiten der Halterung bei nicht geschlossener Führung beitragen können, wirkungsvoll vermieden werden.

Weiter kann vorgesehen sein, dass das Druckstück in der Klemmplatte geführt ist. Das Druckstück ist in bzw. an der Klemmplatte so geführt, dass die Klemmplatte und das Druckstück eine in der Führungsbreite einstellbare Kulissenführung bilden, wobei die bewegliche Kulisse am Druckstück angeordnet ist.

In einer vorteilhaften Ausbildung kann vorgesehen sein, dass das Druckstück mit wenigstens einer Rückholfeder zusammenwirkt, die das Druckstück in die Offenstellung bringt. Die wenigstens eine Rückholfeder kann beispielsweise als eine Druckfeder ausgebildet sein. Vorteilhafterweise können zwei voneinander beabstandete Rückholfedern vorgesehen sein, die so angeordnet sind, dass auf das Druckstück kein Kippmoment ausgeübt wird, das zum Verklemmen des Druckstücks führen kann. Das Druckstück kann beispielsweise durch in Bohrungen mit Spiel eingesetzte Stifte geführt sein, wobei das Spiel vorzugsweise nur mit dem Druckstück oder mit der Klemmplatte ausgebildet sein kann.

Es kann weiter vorgesehen sein, dass die Kraft, die der Exzenter des Schalthebels auf das Druckstück ausübt, größer ist als die Kraft, die die wenigstens eine Rückholfeder auf das Druckstück ausübt. Dadurch ist erreicht, dass das Druckstück nur in die Offenstellung gelangt, wenn der Schalthebel von Hand in der Offenstellung gehalten ist, und dass das Druckstück nach Freigabe des Schalthebels und Betätigung des weiter oben beschriebenen Schaltstiftes in die Führungsstellung gelangt. Auf diese Weise sind Fehlbedienungen ausgeschlossen.

Weiter kann vorgesehen sein, dass die Halterung einen zentrisch angeordneten Längsschlitz aufweist, der von dem Schaft einer Gerätebefestigungsschraube durchgriffen ist. So ist es möglich, dass das auf die Halterung aufgesetzte Gerät in seiner Relativlage zur Halterung befestigbar ist, beispielsweise, um die Halterung im Schwerpunkt des Gerätes zu platzieren. Wenn es sich zum Beispiel bei dem Gerät um einen Photoapparat mit Wechseloptik handelt, kann der Scherpunkt des Photoapparats beim Einsatz eines Teleobjektivs merklich verlagert sein, und die Schwerpunktverlagerung durch die Verschiebung der Gerätebefestigungsschraube im Längsschlitz der Halterung kompensiert werden.

Weiter kann vorteilhafterweise vorgesehen sein,. Auf diese Weise ist die Halterung auch in ihren beiden Endpositionen zuverlässig geführt. Es ist aber auch möglich, dass das Längsmaß der Klemmplatte größer ist als das Längsmaß der Halterung, wenngleich dafür sowohl die Klemmplatte als auch das Druckstück mit größerem Längsmaß ausgeführt sein müssen.

Zweckmäßigerweise kann vorgesehen sein, dass in der Klemmplatte ein Sicherungsstift angeordnet ist, der bei aufgesetzter Halterung in eine in der Unterseite der Halterung angeordnete nicht durchgehende Sicherungsnut eingreift. Die Länge der Sicherungsnut ist vorteilhafterweise so gewählt, dass die Halterung, wie vorstehend beschrieben, auch in den beiden Endpositionen sicher geführt ist. Es ist auch möglich, den Sicherungsstift in der Halterung anzuordnen und die Sicherungsnut in der Klemmplatte, wenngleich der Sicherungsstift bei der Ablage des Geräts mit aufgesetzter Halterung hinderlich sein kann.

Weiter kann vorgesehen sein, dass die Unterseite der Halterung zwei spiegelbildlich angeordnete Sicherungsnuten aufweist. Diese Lösung hat den Vorteil, dass die Halterung auch um 180° gedreht auf die Klemmplatte aufsetzbar ist. Es wäre aber auch möglich, auf die zweite Sicherungsnut zu verzichten und Markierungen vorzusehen, welche die korrekte Aufsetzposition bezeichnen.

Vorteilhafterweise kann vorgesehen sein, dass der Sicherungsstift ein axial verschieblicher federbeaufschlagter Sicherungsstift ist. So ist der Sicherungsstift beim Aufsetzen der Halterung nicht hinderlich und ist weiter gegen Beschädigung, zum Beispiel gegen Abknicken, bei unsachgemäßem Aufsetzen der Halterung geschützt.

Die Erfindung wird nun anhand von Ausführungsbeispielen näher erläutert.

Es zeigen:
- Fig. 1: ein Ausführungsbeispiel einer erfindungsgemäßen Schnellspannvorrichtung in der Offenstellung ohne aufgesetzte Halterung in der Vorderansicht;
- Fig. 2: die Schnellspannvorrichtung in Fig. 1 in der Draufsicht;
- Fig. 3: die Schnellspannvorrichtung in Fig. 1 in der Klemmstellung;
- Fig. 4: die Schnellspannvorrichtung in Fig. 2 in der Klemmstellung;
- Fig. 5: die Einzelheit V in Fig. 4 in vergrößerter Darstellung;
- Fig. 6: die Einzelheit VI in Fig. 2 in vergrößerter Darstellung;
- Fig. 7: die Schnellspannvorrichtung in Fig. 1 mit aufgesetzter Halteplatte;
- Fig. 8: die Schnellspannvorrichtung in Fig. 2 mit aufgesetzter Halteplatte;
- Fig. 9: die Schnellspannvorrichtung in Fig. 3 mit eingesetzter Halteplatte;
- Fig. 10: die Schnellspannvorrichtung in Fig. 4 mit eingesetzter Halteplatte.

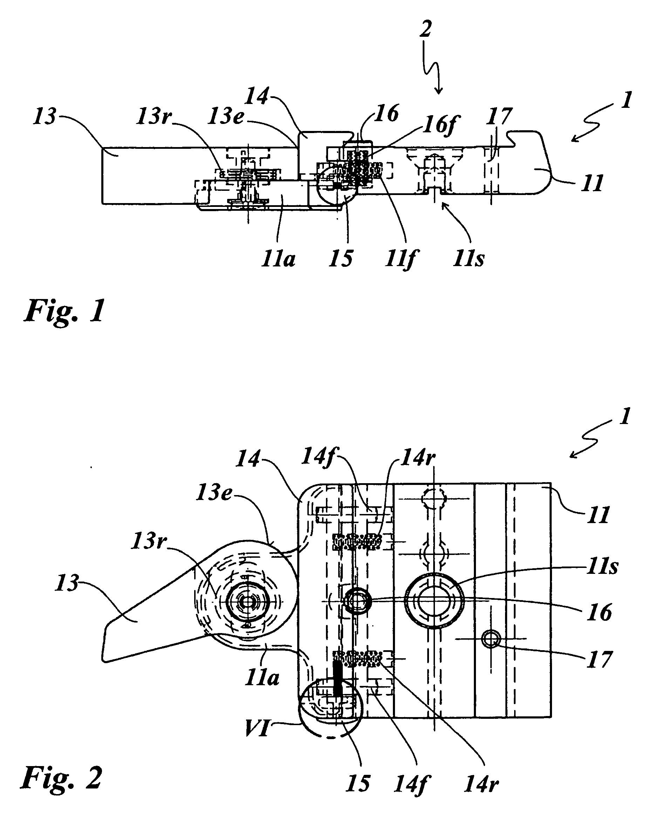

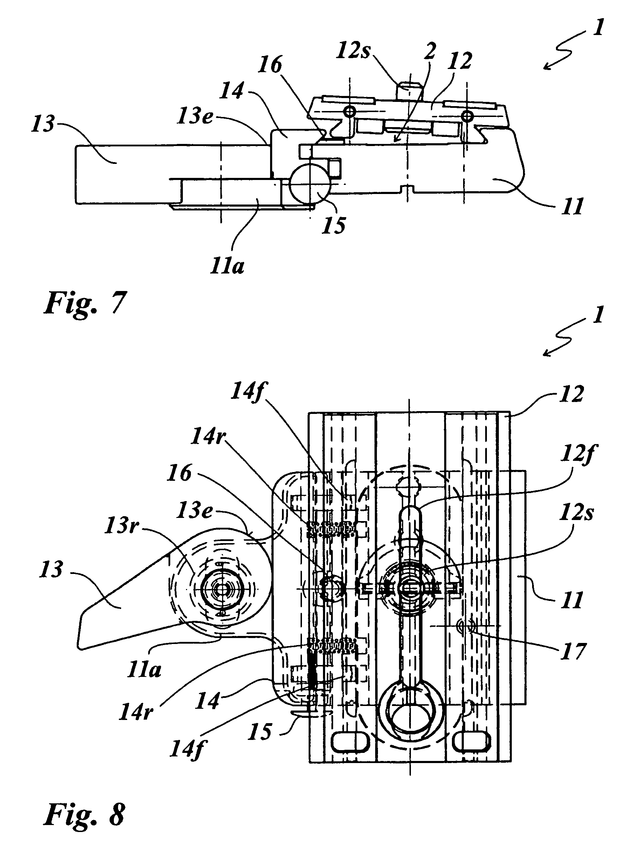

Fig. 1 und 2 zeigen eine Schnellspannvorrichtung 1 mit einer Klemmplatte 11, die mit einem zentralen Gewindesackloch 11 s zur Aufnahme einer an einem Stativ angeordneten Stativschraube ausgebildet ist. Die Klemmplatte 11 bildet das Gestell der Schnellspannvorrichtung 1, die zur Aufnahme einer Halterung 12 (siehe Fig. 7 bis 10) für ein vorzugsweise optisches Gerät, beispielsweise ein Photoapparat oder eine Filmkamera, vorgesehen ist. Die Halterung 12 ist mit dem besagten Gerät lösbar verbunden, wobei die Halterung 12 während des Einsatzes des Geräts vorzugsweise mit dem Gerät verbunden bleibt.

Die Klemmplatte 11 weist im Wesentlichen einen quadratischen Grundriss auf. Die Klemmplatte 11 ist Teil einer prismenförmigen Kulissenführung mit seitlichen Wänden und einer Grundfläche. Die Kulissenführung ist zur Führung und Klemmung der Halterung 12 vorgesehen. In dem in den Fig. 1 bis 4 und 7 bis 10 dargestellten Ausführungsbeispiel ist die Kulissenführung als eine Schwalbenschwanzführung 2 ausgebildet. Die Oberseite der Klemmplatte 11 bildet die Grundfläche der Schwalbenschwanzführung 2. Eie erste Kulisse der Schwalbenschwanzführung ist als ein aus der Oberseite der Klemmplatte 11 hervorspringender wandförmiger Seitenabschnitt ausgebildet, der an der Innenseite mit einer für die Schwalbenschwanzführung charakteristischen im Querschnitt dreieckförmigen Nut ausgebildet ist. Die eine Fläche der Nut fluchtet mit der Oberseite der Klemmplatte 11, die andere Fläche der Nut ist zur Oberseite geneigt und schließt mit ihr einen spitzen Winkel ein. Die geneigte andere Fläche bildet eine erste Anschlags- und Führungsfläche für die Halterung 12.

Eine zweite Kulisse der Schwalbenschwanzführung 2 ist als ein bewegliches Druckstück 14 ausgebildet. Das Druckstück 14 weist einen über die Oberseite der Klemmplatte 11 hervorspringenden oberen Abschnitt auf, der die Oberseite der Klemmplatte 11 übergreift. Der obere Abschnitt des Druckstücks 14 weist an seiner der Klemmplatte 11 zugewandten Innenseite eine nach innen gerichtete Abschrägung auf, die mit der Grundfläche der Klemmplatte 11 einen spitzen Winkel einschließt. Der besagte spitze Winkel ist vorzugsweise gleich dem spitzen Winkel der weiter oben beschriebenen Nut in der ersten Kulisse der Schwalbenschwanzführung 2. Die Abschrägung im Druckstück 2 bildet eine zweite Anschlags- und Führungsfläche für die Halterung 12.

Das Druckstück 14 ist in der Klemmplatte 11 geführt. Das Druckstück 14 greift mit einem unteren prismatischen Abschnitt in eine komplementäre prismatische Nut in der Stirnseite des flachen Seitenabschnitts der Klemmplatte 11 ein. Die prismatische Nut in der Klemmplatte 11 weist eine solche Tiefe auf, dass das Druckstück 14 von einer äußeren Offenstellung über eine Führungsstellung in eine innere Klemmstellung verstellbar ist, wie weiter unten näher beschrieben. Der untere prismatische Abschnitt des Druckstücks 14 weist weiter in seinen beiden Endabschnitten Sacklöcher auf, in die jeweils ein Führungsstift 14f eingepresst ist. Die Führungsstifte 14f gleiten in Führungslöchern, die in die Klemmplatte 11 eingebracht sind. Die Achsen der Führungslöcher sind senkrecht zur Stirnseite des flachen Seitenabschnitts und parallel zur Oberseite der Klemmplatte 11 ausgerichtet, so dass die Klemmplatte 11 und das bewegliche Druckstück 14 eine Schwalbenschwanzführung mit verstellbarer Führungsbreite bilden. Weiter weisen die Klemmplatte 11 und das Druckstück 14 zwei im Bereich innerhalb der Führungsstifte 14f einander gegenüber angeordnete Sacklöcher auf, in denen jeweils eine als Druckfeder ausgebildete Rückholfeder 14r angeordnet ist.

Die Klemmplatte 11 weist weiter an ihrer Unterseite einen über die Stirnseite des flachen Seitenabschnitts hervorspringenden Aufnahmeabschnitt 11a auf, der zur Aufnahme eines Spannhebels 13 bestimmt ist. Der Spannhebel 13 ist mit einem Exzenter 13e ausgebildet und in dem Aufnahmeabschnitt 11a schwenkbar gelagert. Der Exzenter 13e wirkt mit der äußeren Stirnseite des Druckstücks 14 zusammen, wobei der Spannhebel 13 durch eine Rückholfeder 13r in eine Lage gebracht ist, in der der Exzenter 13e an der Stirnseite des Druckstücks 14 anliegt. Die Rückholfeder 13r sorgt folglich dafür, dass das Druckstück 14 bei nicht betätigtem Spannhebel 13 in die Führungsstellung bewegt wird. Die Rückholfeder 13r ist in dem gezeigten Ausführungsbeispiel als eine Drehfeder ausgebildet, insbesondere als eine räumlich gewundene zylindrische Schraubenfeder, die mit dem einen Federende an dem Spannhebel 13 und mit dem anderen Federende an dem Aufnahmeabschnitt 11a der Klemmplatte 11 angreift. Die Rückholfeder 13r wird gespannt, wenn der Spannhebel 13 in die in Fig. 2 und 8 gezeigte Offenstellung gebracht wir, in der die Schnellspannvorrichtung 1 in der Offenstellung sein kann. Die Rückholfeder 13r ist unter Berücksichtigung der Hebelverhältnisse am Spannhebel 13 und am Exzenter 13e so dimensioniert, dass die Kraft, die der Exzenter 13e auf das Druckstück 14 ausübt, größer ist als die Kraft der Rückholfedern 14r.

Die Klemmplatte 11 weist weiter an ihrer Oberseite einen senkrecht zu ihrer Oberseite bewegbaren federbeaufschlagten Schaltstift 16 auf, der in seiner oberen Stellung die Oberseite der Klemmplatte 11 durchgreift und in seiner unteren Stellung mit der Oberseite der Klemmplatte 11 abschließt. Der Schaltstift 16 ist so angeordnet, dass er in der Offenstellung der Schnellspannvorrichtung 1 einen Anschlag für das Druckstück 14 bildet und dabei mittig an dem Druckstück 14 angreift. Der Schaltstift 16 steht dazu in der oberen Stellung im Eingriff mit der an der Innenseite des Druckstücks 14 ausgebildeten Abschrägung (siehe Fig. 1). Infolgedessen kann das Druckstück 14 nicht in die Führungsstellung oder die Klemmstellung gelangen, obwohl es durch den Exzenter 13e des unter Federspannung stehenden Spannhebels 13 in Richtung der Führungsstellung gedrückt wird. Der Schaltstift 16 weist ein von der Unterseite des Schaltstiftes 16 her nach oben erstrecktes Sackloch auf, in dem eine Druckfeder 16f angeordnet ist, die sich in einem Sackloch in der Klemmplatte 11 abstützt.

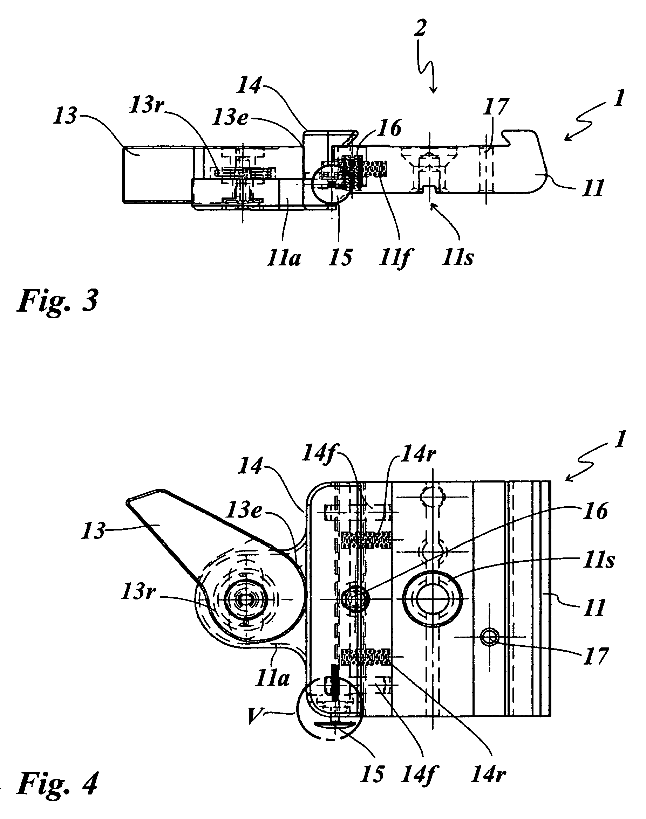

Die Fig. 3 und 4 zeigen nun die Schnellspannvorrichtung 1 in der Klemmstellung. Der Schaltstift 16 befindet sich in der unteren Stellung, in der seine obere Stirnseite mit der Oberseite der Klemmplatte 11 fluchtet. Infolgedessen ist der Anschlag für das Druckstück 14 aufgehoben und das Druckstück 14 ist durch den Exzenter 13r des Spannhebels 13 in die Klemmstellung der Schnellspannvorrichtung 1 gebracht.

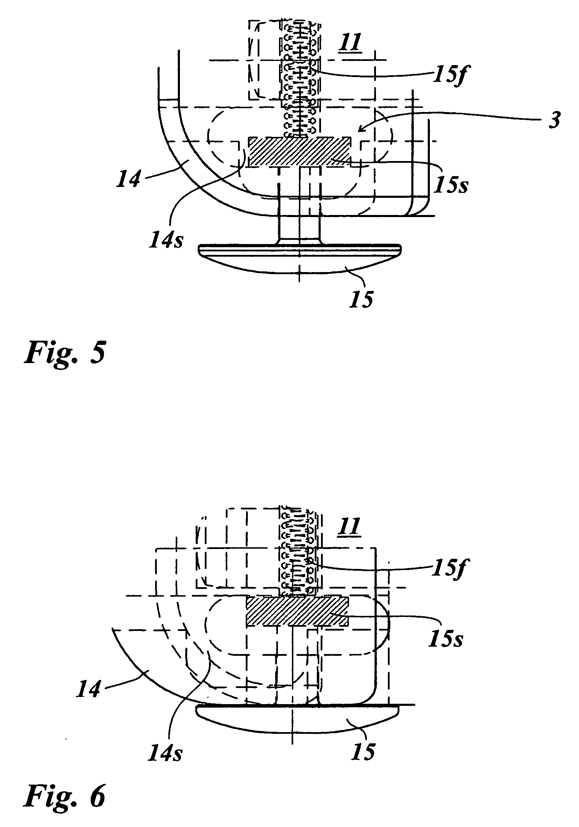

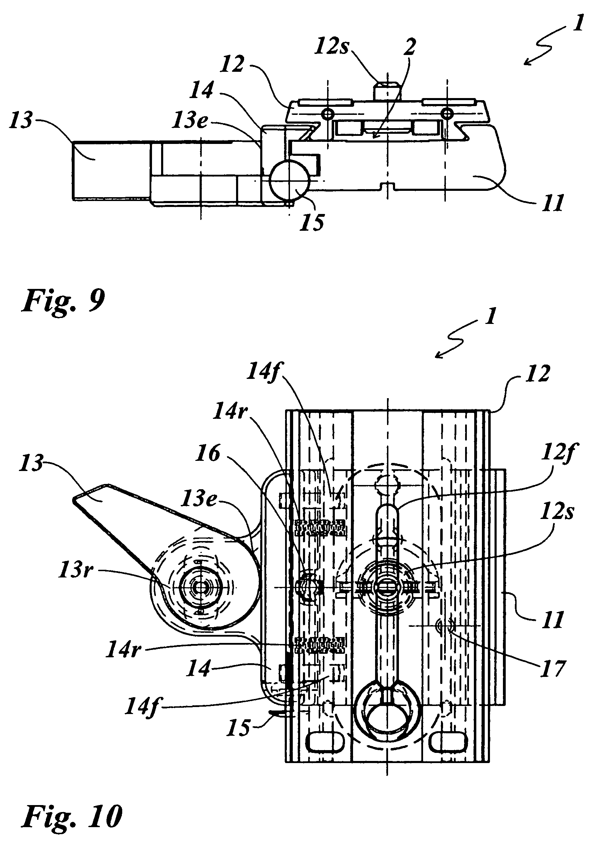

Wird nun der Spannhebel 13 von Hand in die in Fig. 2 gezeigte Offenstellung gebracht, so wird das Druckstück 14 zunächst durch ein Formgesperre 3, wie in Fig. 5 im Einzelnen gezeigt, im Bereich der Führungsstellung gehalten. Das Formgesperre 3 ist im Wesentlichen durch ein Sperrstück 15s und eine Sperrausnehmung 14s im Druckstück 14 gebildet. Das Sperrstück 15s ist mit einem stiftförmigen Schaft eines Tasters 15 drehstarr verbunden, wobei der Taster 15 als ein Drucktaster ausgebildet ist, der durch eine Druckfeder beaufschlagt ist, die das Sperrstück 15s in der Sperrausnehmung 14s hält. Die Achse des Tasters 15 ist senkrecht zu der Bewegungsrichtung des Druckstücks 14 ausgerichtet. Wenn der Spannhebel 13 wieder losgelassen wird, so wird er durch die Rückholfeder 13r wieder in eine Drehlage gebracht, in der der Exzenter 13e an dem Druckstück 14 anliegt. Wenn weiter, wie in Fig. 9 weiter unten dargestellt, die Halterung 12 in die Schwalbenschwanzführung 2 eingesetzt ist, kann die Halterung 12 in der Schwalbenschwanzführung 2 spielfrei bewegt werden. Wie in Fig. 5 zu erkennen, ist die Länge des Sperrstücks 15s kleiner als die lichte Weite der Speerausnehmung 14s. Folglich ist das Sperrstück 15s um einen geringen Betrag in der Sperrausnehmung 14s seitenbeweglich, so dass das Druckstück 14 nach Freigabe des Sperrhebels 13 weiter mit der Federkraft der Rückholfeder 13r auf die Halterung 12 gepresst ist.

Fig. 6 zeigt nun den Ausschnitt VI in Fig. 2, bei dem der Taster 15 eingedrückt ist. Das Formgesperre 3 ist nun gelöst, weil das Sperrstück 15s nicht mehr im Eingriff mit der Sperrausnehmung 14s im Druckstück 14 ist. Weiter ist der Spannhebel 13 in die Offenstellung gebracht, und das nicht mehr mit dem Exzenter 13e in Eingriff stehende Druckstück 14 ist durch die beiden Rückholfedern 14r in die Offenstellung gebracht. Dadurch wird unter der Voraussetzung, dass keine Halterung 12 eingelegt ist, der Schaltstift 16 wieder freigegeben und durch die in ihm angeordnete Druckfeder 16f in die obere Stellung gebracht, so dass er für das Druckstück 14, wie weiter oben beschrieben, einen Anschlag bildet. Dadurch verbleibt auch der Spannhebel 13 in der Offenstellung.

Die Fig. 7 bis 10 zeigen nun die Schnellspannvorrichtung 1 mit aufgelegter bzw. eingelegter Halterung 12.

Die Halterung 12 weist im unteren Abschnitt zwei parallel angeordnete und voneinander beabstandete Führungsleisten auf. Die Führungsleisten weisen abgeschrägte Außenseiten auf, deren Winkel dem Winkel der Anschlagflächen der Schwalbenschwanzführung 2 entspricht. Der Abstand der Führungsleisten ist so bemessen, dass die Halterung 12, wie weiter oben beschrieben, bei gelöster Klemmung spielfrei in der Schwalbenschwanzführung 2 gleitet und in der Klemmstellung der Schnellspannvorrichtung 1 sicher geklemmt ist.

Zur Befestigung eines Gerätes auf der Halterung weist die Halterung 12 eine in einer Längsnut (siehe Fig. 8 und 10) geführte Befestigungsschraube 12s auf. Die Längsnut erlaubt die Verschiebung des Gerätes auf der Halterung, um beispielsweise den Schwerpunkt des Gerätes über die stativseitige Befestigungsstelle der Klemmplatte 11 zu bringen. Zur Feineinstellung der Schwerpunktlage ist das Gerät mit montierter Halterung 12 in der Schwalbenschwanzführung 2 verschieblich, wie weiter oben beschrieben. Insbesondere bei Spiegelreflexkameras mit großen Teleobjektiven sind die beschriebenen Verstellmöglichkeiten von großem Vorteil.

Wie in Fig. 7 zu sehen, ist die Halterung 12 zunächst einseitig in die Schwalbenschwanzführung 2 eingesetzt, indem die eine Führungsleiste der Halterung 12 in die im hervorspringenden Seitenabschnitt der Klemmplatte 11 ausgebildete Nut eingeführt wird. Die andere Führungsleiste liegt nun auf dem Schaltstift 16 auf. Wird nun, wie in Fig. 9 dargestellt, die Halterung 12 in die geöffnete Schwalbenschwanzführung 2 eingedrückt, wird dabei der Schaltstift 16 betätigt und von der oberen Stellung in die untere Stellung gebracht, in der das Druckstück 14 freigegeben ist. Das Druckstück 14 wird nun durch den Exzenter 13e des Spannhebels 13 gegen die andere Führungsleiste der Halterung 12 gedrückt, wodurch die Schwalbenschwanzführung 2 geschlossen ist. Durch diesen automatischen Ablauf ist bereits die Halterung 12 soweit fixiert, dass ein auf die Halterung 12 montiertes Gerät nicht herunterfallen kann. Das Druckstück 14 befindet sich in der Führungsstellung.

Als weitere Sicherung gegen Herabfallen der Halterung bzw. Herausgleiten der Halterung 12 aus der Schwalbenschwanzführung 2 ist ein in den Fig. 1 bis 4 und 7 bis 10 nicht dargestellter Sicherungsstift vorgesehen, der in ein Gewindeloch 17 in der Klemmplatte 11 eingeschraubt ist. Der Sicherungsstift wirkt mit einer nicht durchgehenden Sicherungsnut in der Unterseite der Halterung 12 zusammen. Vorteilhafterweise können zwei spiegelbildlich angeordnete Sicherungsnuten vorgesehen sein, so dass keine Beschränkung hinsichtlich der Drehlage der Halterung 12 beim Einsetzen in die Schwalbenschwanzführung 2 eintritt. Der Sicherungsstift kann vorteilhafterweise als axial gefederter Sicherungsstift ausgebildet sein, der zunächst beim Einsetzen der Halterung 12 niedergedrückt wird, wenn sich der Stift außerhalb des Bereiches der Sicherungsnut befindet. Beim seitlichen Verschieben der Halterung 12 rastet der Sicherungsstift sodann in die Sicherungsnut ein.

Die Fig. 9 und 10 zeigen die Schnellspannvorrichtung 1 mit eingesetzter Halterung 12 in der Klemmstellung. Der Spannhebel 13 ist nun von Hand in die Klemmstellung gebracht, in der die Halterung 12 über das Druckstück 14 in der Schwalbenschwanzführung 2 geklemmt ist. Dabei findet am Exzenter 13e eine Kraftverstärkung statt, so dass mit mäßigem Kraftaufwand eine hohe Klemmkraft aufgebracht wird, die es ermöglicht, auch Geräte mit hoher Masse sicher zu fixieren.

### Bezugszeichenliste

- 1: Schnellspannvorrichtung
- 2: Schwalbenschwanzführung
- 3: Formgesperre
- 11: Klemmplatte
- 11a: Aufnahmeabschnitt
- 11s: Gewindesackloch
- 12: Halterung
- 13: Spannhebel
- 13e: Exzenter
- 13r: Rückholfeder
- 14: Druckstück
- 14f: Führungsstift
- 14r: Rückholfeder
- 14s: Sperrausnehmung
- 15: Taster
- 15f: Druckfeder
- 15s: Sperrstück
- 16: Schaltstift
- 16f: Druckfeder
- 17: Gewindeloch zur Aufnahme eines gefederten Sicherungsstiftes

## Patentansprüche

1. Schnellspannvorrichtung (1) für ein vorzugsweise optisches Gerät, insbesondere ein fototechnisches oder filmtechnisches Gerät, mit einer Klemmplatte (11) für eine daran feststellbare Halterung (12) für das Gerät, wobei die Klemmplatte (11) als eine prismenförmige Kulissenführung mit seitlichen Wänden und einer Grundfläche ausgeführt ist, wobei ein Teil der Kulissenführung einen Anschlag bildet und ein anderer Teil ein von einer Offenstellung über eine Führungsstellung in eine Klemmstellung verschiebbares Druckstück (14) ist,
wobei das Druckstück (14) durch einen Spannhebel (13) mit einem Exzenter (13e)
verschiebbar ist, wobei der Spannhebel (13) von einer Offenstellung über eine Führungsstellung in eine Klemmstellung schwenkbar ist, und **dadurch gekennzeichnet, dass** ein schaltbares Formgesperre das Druckstück (14) daran hindert, aus der Führungsstellung in die Offenstellung zu gelangen.

2. Schnellspannvorrichtung nach Anspruch 1,
**dadurch gekennzeichnet,**
**dass** der Spannhebel (13) mit einer Rückholfeder (13r) zusammenwirkt, die den Spannhebel (13) aus der Offenstellung dreht.

3. Schnellspannvorrichtung nach Anspruch 1 oder 2,
**dadurch gekennzeichnet,**
**dass** das Formgesperre durch einen federbeaufschlagten Taster (15) schaltbar ist.

4. Schnellspannvorrichtung nach einem der vorangehenden Ansprüche,
**dadurch gekennzeichnet,**
**dass** die Kulissenführung als eine Schwalbenschwanzführung (2) ausgebildet ist.

5. Schnellspannvorrichtung nach einem der vorangehenden Ansprüche,
**dadurch gekennzeichnet,**
**dass** die Klemmplatte (11) von einem in der Längsachse federbeaufschlagten Schaltstift (16) durchgriffen ist, der in der Offenstellung des Druckstücks (14) aus der Oberseite der Klemmplatte (11) hervorragt und einen Anschlag für das Druckstück (14) bildet.

6. Schnellspannvorrichtung nach Anspruch 5,
**dadurch gekennzeichnet,**
**dass** der Schaltstift (16) bei eingesetzter Halterung (12) mit der Oberseite der Klemmplatte (11) abschließt und das Druckstück (14) freigibt, wobei der Schaltstift (16) mit einem Abschnitt an der Unterseite der Halterung (12) zusammenwirkt.

7. Schnellspannvorrichtung nach einem der vorangehenden Ansprüche, dass das Druckstück (14) in der Klemmplatte (11) geführt ist.

8. Schnellspannvorrichtung nach Anspruch 7,
**dadurch gekennzeichnet,**
**dass** das Druckstück (14) mit wenigstens einer Rückholfeder (14r) zusammenwirkt, die das Druckstück (14) in die Offenstellung bringt.

9. Schellspannvorrichtung nach Anspruch 8,
**dadurch gekennzeichnet,**
**dass** die Kraft, die der Exzenter (13e) des Schalthebels (13) auf das Druckstück (14) ausübt, größer ist als die Kraft, die die wenigstens eine Rückholfeder (14r) auf das Druckstück (14) ausübt.

10. Schnellspannvorrichtung nach einem der vorangehenden Ansprüche,
**dadurch gekennzeichnet,**
**dass** die Halterung (12) einen zentrisch angeordneten Längsschlitz aufweist, der von dem Schaft einer Gerätebefestigungsschraube durchgriffen ist.

11. Schnellspannvorrichtung nach einem der vorangehenden Ansprüche,
**dadurch gekennzeichnet,**
**dass** das Längsmaß der Halterung (12) größer ist als das Längsmaß der Klemmplatte (11).

12. Schnellspannvorrichtung nach einem der vorangehenden Ansprüche,
**dadurch gekennzeichnet,**
**dass** in der Klemmplatte (11) ein Sicherungsstift angeordnet ist, der bei aufgesetzter Halterung in eine in der Unterseite der Halterung (12) angeordnete nicht durchgehende Sicherungsnut eingreift.

13. Schnellspannvorrichtung nach Anspruch 12,
**dadurch gekennzeichnet,**
**dass** die Unterseite der Halterung (12) zwei spiegelbildlich angeordnete Sicherungsnuten aufweist.

14. Schnellspannvorrichtung nach Anspruch 12,
**dadurch gekennzeichnet,**
**dass** der Sicherungsstift ein axial verschieblicher federbeaufschlagter Sicherungsstift ist.

## Claims

1. Quick-action clamping device (1), in particular for an optical instrument, especially a photographic apparatus or apparatus used in film technology, with a clamping plate (11) on which a mounting (12) for the apparatus can be locked, whereby the clamping plate (11) is implemented as a prism-shaped sliding block guide with side walls and a base surface, whereby one part of the sliding block guide forms a stop and another part is a thrust member (14), which can be slid from an open position via a guiding position into a clamping position,
whereby the thrust member (14) is displaced by a clamping lever (13) with an eccentric cam portion (13e), whereby the clamping lever (13) can be swivelled from an open position via a guide position to a clamping position and **characterised in that** an operable inhibit device prevents the thrust member (14) from moving from the guide position to the open position.

2. Quick-action clamping device according to claim 1, **characterised in that**,
the clamping lever (13) operates in combination with a restoring spring (13r), which rotates the clamping lever (13) from the open position.

3. Quick-action clamping device according to claim 1 or 2,
**characterised in that**,
the inhibit device is operable by means of a button (15) acted on by a spring.

4. Quick-action clamping device according to one of the preceding claims,
**characterised in that**,
the sliding block guide is formed as a dovetail guide (2).

5. Quick-action clamping device according to one of the preceding claims,
**characterised in that**,
the clamping plate (11) is penetrated by an operating pin (16) spring loaded on its longitudinal axis, which in the open position of the thrust member (14) protrudes from the upper side of the clamping plate (11) and forms a stop for the thrust member (14).

6. Quick-action clamping device according to claim 5,
**characterised in that**,
with the mounting (12) inserted, the operating pin (16) is flush with the upper side of the clamping plate (11) and releases the thrust member (14), whereby the operating pin (16) operates in conjunction with a section on the underside of the mounting (12).

7. Quick-action clamping device according to one of the preceding claims,in that the thrust member (14) is guided in the clamping plate (11).

8. Quick-action clamping device according to claim 7,
**characterised in that**,
the thrust member (14) operates in conjunction with at least one restoring spring (14r), which positions the thrust member (14) in the open position.

9. Quick-action clamping device according to claim 8,
**characterised in that**,
the force, which the eccentric cam portion (13e) of the clamping lever (13) exerts on the thrust member (14), is greater than the force which the at least one restoring spring (14r) exerts on the thrust member (14).

10. Quick-action clamping device according to one of the preceding claims,
**characterised in that**,
the mounting (12) has a centrically arranged longitudinal slot, which is penetrated by the shank of an equipment mounting screw.

11. Quick-action clamping device according to one of the preceding claims,
**characterised in that**,
the longitudinal dimension of the mounting (12) is greater than the longitudinal dimension of the clamping plate (11).

12. Quick-action clamping device according to one of the preceding claims,
**characterised in that**,
a locking pin is arranged in the clamping plate (11), which engages in a non-through going safety groove arranged in the underside of the mounting (12).

13. Quick-action clamping device according to claim 12,
**characterised in that**,
the underside of the mounting (12) has two safety grooves in a mirror-image arrangement.

14. Quick-action clamping device according to claim 12,
**characterised in that**,
the locking pin is an axially-displaceable spring-loaded locking pin.

## Revendications

1. Dispositif d'attache rapide (1) pour un appareil de préférence optique, en particulier un appareil de photographie ou de cinéma, comprenant une plaque de serrage (11) pour un support (12) pouvant être fixé dessus pour l'appareil, la plaque de serrage (11) étant réalisée sous forme d'un guide à coulisse en forme de prisme avec des parois latérales et une surface de base, une partie du guide à coulisse formant une butée et une autre partie étant une pièce de pression (14) pouvant coulisser d'une position ouverte dans une position de serrage en passant par une position de guidage,
la pièce de pression (14) pouvant être déplacée par un levier d'attache (13) avec un excentrique (13e), le levier d'attache (13) pouvant être basculé d'une position ouverte dans une position de serrage par l'intermédiaire d'une position de guidage,
**caractérisé en ce qu'**un dispositif d'encliquetage par forme commutable empêche la pièce de pression (14) de parvenir de la position de guidage dans la position ouverte.

2. Dispositif d'attache rapide selon la revendication 1,
**caractérisé en ce que**
le levier d'attache (13) coopère avec un ressort de rappel (13r), qui fait tourner le levier d'attache (13) à partir de la position ouverte.

3. Dispositif d'attache rapide selon la revendication 1 ou 2,
**caractérisé en ce que**
le dispositif d'encliquetage peut être commuté par un bouton-poussoir (15) sollicité par ressort.

4. Dispositif d'attache rapide selon l'une des revendications précédentes,
**caractérisé en ce que**
le guide à coulisse est conçu sous forme d'un guide en queue d'aronde (2).

5. Dispositif d'attache rapide selon l'une des revendications précédentes,
**caractérisé en ce que**
la plaque de serrage (11) est traversée par une goupille de commutation (16) sollicitée par ressort dans l'axe longitudinal, qui dépasse du côté supérieur de la plaque de serrage (11) dans la position ouverte de la pièce de pression (14) et forme une butée pour la pièce de pression (14).

6. Dispositif de serrage rapide selon la revendication 5,
**caractérisé en ce que**
la goupille de commutation (16) se termine avec le côté supérieur de la plaque de serrage (11) lorsque le support (12) est inséré et libère la pièce de pression (14), la goupille de commutation (16) coopérant avec une partie sur le côté inférieur du support (12).

7. Dispositif d'attache rapide selon l'une des revendications précédentes,
**caractérisé en ce que** la pièce de pression (14) est guidée dans la plaque de serrage (11).

8. Dispositif d'attache rapide selon la revendication 7,
**caractérisé en ce que**
la pièce de pression (14) coopère avec au moins un ressort de rappel (14r), qui amène la pièce de pression (14) dans la position ouverte.

9. Dispositif d'attache rapide selon la revendication 8,
**caractérisé en ce que**
la force, que l'excentrique (13e) du levier de commutation (13) exerce sur la pièce de pression (14) est supérieure à la force que le au moins une ressort de rappel (14r) exerce sur la pièce de pression (14).

10. Dispositif d'attache rapide selon l'une des revendications précédentes,
**caractérisé en ce que**
le support (12) présente une fente longitudinale disposée de façon centrée, qui est traversée par la tige d'une vis de fixation d'appareil.

11. Dispositif d'attache rapide selon l'une des revendications précédentes,
**caractérisé en ce que**
la cote longitudinale du support (12) est supérieure à la cote longitudinale de la plaque de serrage (11).

12. Dispositif d'attache rapide selon l'une des revendications précédentes,
**caractérisé en ce qu'**une goupille de sécurité est disposée dans la plaque de serrage (11), laquelle goupille s'engage, lorsque le support est posé dessus, dans une rainure de sécurité non continue et disposée sur le côté inférieur du support (12).

13. Dispositif d'attache rapide selon la revendication 12,
**caractérisé en ce que**
le côté inférieur du support (12) présente deux rainures de sécurité disposées de façon symétrique.

14. Dispositif d'attache rapide selon la revendication 12,
**caractérisé en ce que**
la goupille de sécurité est une goupille de sécurité sollicitée par ressort et coulissant axialement.
